# EUROPEAN PATENT SPECIFICATION

(11) **EP 0 818 646 B1**
(45) Date of publication and mention of the grant of the patent: **06.03.2002**
(21) Application number: 97202057.2
(22) Date of filing: 03.07.1997
(51) Int. Cl.: F16K 31/04, G05D 23/275

(54) **Fluid distribution valve comprising a.c. controllable means for deviating the flow of the fluid**
Wechselstrommotorgesteuerter Flüssigkeitsverteiler zur Ablenkung des Flüssigkeitsstroms
Distributeur de fluide commandé d'un moteur à courant alternatif pour dévier l'écoulement de fluide

(30) Priority: 08.07.1996 IT MI961407
(43) Date of publication of application: 14.01.1998
(73) Proprietor: WATTS CAZZANIGA S.p.A., 39100 Bolzano (IT)
(72) Inventor: Cazzaniga, Luigi, Milano (IT)
(74) Representative: Raimondi, Alfredo, Dott. Ing. Prof.

(56) References cited:
- EP-A- 0 050 960
- CA-A- 989 935
- DE-U- 9 010 608
- GB-A- 2 026 794
- GB-A- 2 239 077

## Description

The present invention relates to a multiple-path fluid distribution valve provided with a.c. powered means for deviating the delivery of the fluid along one or more of said valve paths, which can be automatically operated and controlled by means of timed interruption of the said alternating supply current.

In the art relating to the distribution of fluids at temperature, as for example in heating plants in which the water from the boiler is conveyed both to the radiators for heating the environment and to the devices for delivery of the hot water, it is known to use deviating valves provided with actuators controlled electrically by means of thermostats or similar control and command devices.

It is also known that the deviating element of said valves is moved into position by means of a motor acting on a cam element designed to cause the deviator to assume three different positions, two of which respectively opposite one another, for closing one or other of the two said ducts supplying the hot water to the various users, and one intermediate position where the delivery water supplied from the boiler is throttled and deviated towards both the said ducts.

It is also known that the problem of said valves mainly consists in the need to stop the deviator actuating motor in correspondence with the three aforementioned positions, via the associated control means.

Some control means of the known type are based, for example, on the use of devices designed to reduce the supply voltage to the motor; said means are simple, but of limited reliability since they are unable to balance the inertial masses of the parts which are still in movement, and therefore result in a high degree of imprecision in intermediate positioning with consequent difficulty in regulation of the two throughputs.

An example of said types of control circuits is for example described in GB 2,142,709.

A further solution is also known from GB 2,026,794 which involves a motor control circuit based on sending to the said motor a direct current signal in order to stop the motor in correspondence with the desired position of the deviator to be positioned correctly as required.

The technical problem which is posed, therefore, is that of providing a fluid distribution valve which is provided with controllable deviation means, has a simple and reliable design and is designed to position the deviating element in a precise manner.

Within the scope of said problem a further necessity is that the motor actuating the deviating element should be able to be easily disassembled for the normal operations of maintenance and/or replacement in the case of breakage.

These results are obtained by the present invention which envisages a fluid distribution valve comprising at least one delivery duct and at least two exit ducts for the fluid, means for deviating the flow of the fluid which can be made to rotate by means of a motor supplied with alternating current, against the recall action of springs and a circuit for controlling said alternating current supplying the motor, wherein there is provided a plate integral with said deviating means and having formed on it a rack designed to mesh with a corresponding pinion integral with the motor, said plate having a sliding shoe from which there radially extend two projections designed to actuate two corresponding switches connected to the circuit controlling the power supply of the motor, said circuit comprising means for detecting the temperature of said fluid exit ducts, timing means designed to define a time interval during which the power supply to the motor is interrupted, and means for supplying the motor with an alternating current less than the nominal current and designed to balance the recall action of the springs in order to maintain the position reached and signalled by one of the two switches.

Preferred embodiments of the invention are defined in the dependent claims.

Further details may be obtained from the following description of an example of embodiment of the invention, provided with reference to the accompanying drawings, in which:
Figure 1 shows a schematic exploded view of the devices for actuating and controlling the valve deviating element according to the present invention;
Figure 2 shows a front view of the assembled valve;
Figure 3 shows a partial schematic view of the valve and the associated control circuit diagram, with the deviator in the rest position closing one of the two ducts;
Figure 4 shows a partial schematic view of the valve and the associated control circuit with the deviator in the intermediate position between the two ducts;
Figure 5 shows a partial schematic view of the valve and the control circuit with the deviator in the end-of-travel position closing the other duct.

As shown in the Figures, the valve 1 according to the invention comprises a body 1a onto which the three ducts, i.e. the delivery duct 2 and exits ducts 3 and 4, are engaged.

The body 1a has housed inside it a spindle 5 having integral with it the deviating element 6 which extends in the radial direction and is arranged above the delivery duct 2 and positioned between the two exit ducts 3 and 4.

The top end of the spindle 5 has integrally fixed to it a shaped plate 10 which comprises a front part 11, extending in a substantially radial direction and formed in the manner of a curved rack 11a, and a rear flange 12, elongated radially on the opposite side to the rack 11a, which is provided on its bottom surface with a pin 13a for fastening with one end of a first spring 13, the other end of which is anchored to the fixed body of the valve.

In the region of the top surface of the rack 11 there is moreover fastened one end of a second spring 14, the other end of which is fastened to the fixed body of the valve on the opposite side to the first spring 13.

In this way the two springs 13 and 14 operate in opposition to one another, but in unison during the action involving recall of the shaped plate 10 into the rest position, as will emerge more clearly below.

On one of the sides of the plate 10 there extends moreover downwards a sliding shoe 15 carrying two cams 16 and 17 extending in the radial direction and arranged one on top of the other angularly offset by a few degrees with respect to one another.

Said cams are designed to cooperate with respective switches 21 and 22 of the control circuit 20 described below.

The bottom surface of said sliding shoe 15 moreover travels in contact with a leaf-spring 18 which has an arched relief 18a arranged in correspondence with the rest position of the deviator 6, where the motor 19 is not energized; in this way the friction between sliding shoe and leaf-spring gradually increases as the deviator moves towards the end-of-travel point, reducing the knocks on the motor shaft due to the rapid return movement of the spindle 5 caused by the recall action of the springs 13 and 14.

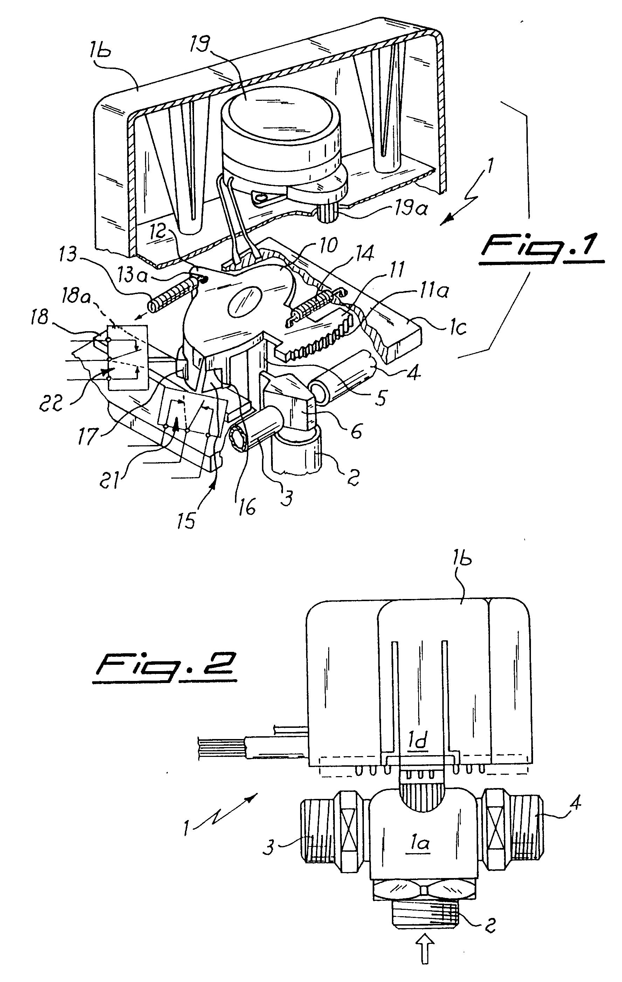

As shown in Figure 1, the spindle 5 carrying the deviator is made to rotate by means of an alternating current motor 19, the shaft of which has connected to it a pinion 19a designed to mesh with the rack 11a so as to cause actuation of the deviator 6.

The motor 19 is moreover mounted integrally on the cover 1b of the valve, which may be attached to a base-piece 1c, integral with the body 1a of the valve 1, by means of elastic force-fitting means 1d known per se and therefore not illustrated in detail; this type of fixture between cover and base-piece allows the motor to be fitted/removed together with the cover by means of a simple manual manoeuvre which does not require tools, making any maintenance operation extremely easy and rapid.

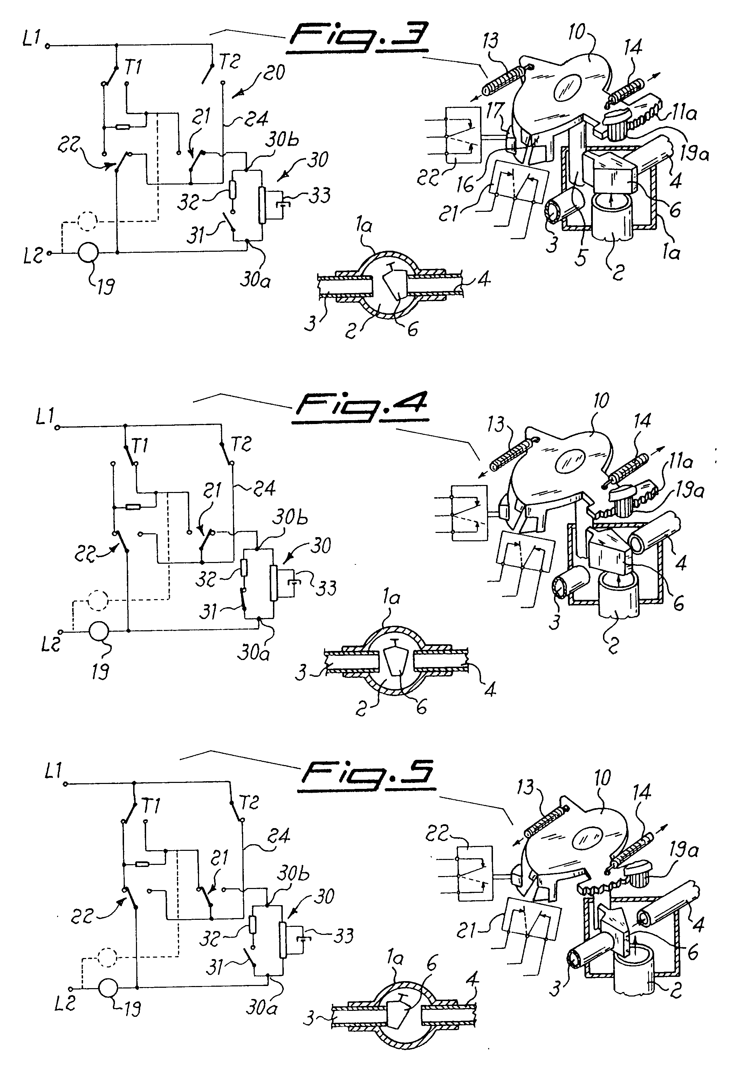

The control circuit 20 (Figure 3) comprises two thermostats T1 and T2 and the two said switches 21 and 22 connected via the circuitry to the motor 19 and to the electronic programming circuit 30.

Said circuit 30 substantially comprises a switch 31 arranged in series with a voltage drop element 32 and in parallel with a retarding component 33, in the example consisting of an electrolytic capacitor.

As illustrated in Figure 3, the valve is arranged so as to keep the deviator in a rest position where the springs 13 and 14 are not subject to traction and the two thermostats T1, T2 are both in the OFF position, the motor 19 is not supplied with the alternating current from the power supply source L1-L2 and the two switches 21 and 22 maintain their normally closed position; in this configuration the duct 4 is closed by the deviator 6 and all the fluid from the delivery point 2 is deviated towards the duct 3.

If the thermostat T2 were activated and set to the ON position, i.e. if it were required to supply the other exit duct 4 of the valve, the motor 19 would be supplied with alternating current via the wire 24 and the normally closed contact of the switch 21 which, via the other normally closed switch 22, keeps short-circuited the terminals 30a and 30b of the electronic system 30 cooperating so as to cause stoppage of the motor 19.

Assuming that both the thermostats T1 and T2 are set to the ON position (Figure 4), the motor 19 is energized via the wire 24 and the normally closed contact of the switch 22 and causes rotation of the pinion 19a which, via the rack 11, causes rotation of the spindle 5 and hence the deviator 6 and the plate 10 connected thereto.

During rotation of the spindle 5, the cam 16 integral with the plate 10 comes into contact with the switch 21, opening of which, via the still closed end-of-travel contact 22, connects the electronic circuit 30 in series with the motor via the terminals 30a and 30b.

Said electronic circuit interrupts the flow of the power supply current for the time interval necessary to cause charging of the capacitor 33 and hence closing of the switch 31; during said time interval the motor is therefore not energized and is subject to a temporary stoppage.

Once the said time interval has lapsed, the switch is tripped, causing the flow of a voltage, and consequently a cor responding current, smaller than the nominal one, owing to the drop on the component 32, said reduced current being such as to cause the application, onto the pinion 19a, of a torque sufficient to balance the recall force of the two springs 13 and 14 which are tensioned by rotation of the plate 10, but not sufficient to allow continued rotation of the latter.

In this way the deviator 6 is kept stationary in the intermediate position between the two ducts 3 and 4, which are both supplied with fluid from the delivery point 2.

If the thermostat T1 were to be set to the OFF position (Figure 5), the programming circuit 30 is excluded and the motor 19 would again be supplied with the maximum current via the wire 27, since the end-of-travel element 22 is activated; the motor therefore continues to rotate until it brings the deviator 6 onto the opposite side to the rest position, causing closing of the duct 3 and hence supplying of the fluid to the duct 4 alone.

At this point if the thermostat T1 were to return into the ON position, the plate 10 recalled by the action of the springs 13 and 14 would start a rotation in the opposite direction to the preceding one until the cam 16, acting on the switch 21, causes the return movement thereof into the closed position, causing conduction again of the electronic circuit 30 which, after interrupting for a programmable period of time the supply voltage to the motor 19, applies to the latter a supply voltage sufficient to balance the recall action of the springs 13 and 14, as already described, and therefore keep the deviator 6 in the intermediate position corresponding to the ducts 3 and 4 being both open.

If the thermostat T2 were then also set to the OFF position, the motor would not be energized and the springs 13 and 14 would bring the plate 10 and hence the deviator 6 back into the rest condition corresponding to the duct 4 being closed.

It is therefore obvious how the valve according to the invention results in a simple and economical design and precise and reliable operation based on interruption of the alternating current supplying the motor for a predetermined period of time, after lapsing of which, the motor itself is supplied with an alternating current smaller than the nominal current so as to obtain a torque of sufficient magnitude to balance the recall action exerted by the springs 13 and 14 in correspondence with a predetermined position, but not allow continued rotation of the deviating element.

Many variations may be introduced as regards the realization of the parts which make up the invention, without thereby departing from the protective scope of the present invention, as defined by the claims which follow.

## Claims

1. Fluid distribution valve comprising at least one delivery duct (2) and at least two exit ducts (3,4) for the fluid, means (5,6) for deviating the fluid, which can be made to rotate by means of a motor (19) supplied with alternating current against the recall action of springs (13,14) and a circuit (20) for controlling said alternating current supplying the motor (19), **characterized in that** it comprises a plate (10) integral with said deviating means (5,6) and having formed on it a rack (11a) designed to mesh with a corresponding pinion (19a) integral with the motor (19), said plate having a sliding shoe (15) from which there radially extend two projections (16,17) designed to actuate two corresponding switches (21,22) connected to the circuit (20) controlling the motor power supply, said circuit comprising means (T1,T2) for detecting the temperature of said exit ducts (3,4), timing means (33) designed to define a time interval during which the power supply to the motor (19) is interrupted and means (31,32) for supplying the motor with an alternating current which is less than the nominal current and designed to balance the recall action of said springs (13,14) in order to maintain the position reached and signalled by one (21) of the two switches (21,22).

2. Valve according to Claim 1, **characterized in that** said springs (13,14) are torsional springs having their opposite ends respectively fastened to said plate (10) and to a fixed base-piece (1c) integral with the body (1b) of the valve so as to be opposed to one another, but acting in unison so as to recall the plate (10) into the rest position.

3. Valve according to Claim 1, **characterized in that** the bottom surface of said sliding shoe (15) slides on a leaf-spring (18) arched in correspondence with the rest position of the deviator (6) so as to limit the knocks on the shaft of the motor (19) when the latter stops.

4. Valve according to Claim 1, **characterized in that** said motor is integral with a cover (1b) of the valve body.

5. Valve according to Claim 4, **characterized in that** said cover can be fitted onto said body via elastic snap-engagement means (1d) which can be operated manually.

6. Valve according to Claim 1, **characterized in that** said switches (21,22) are normally closed.

7. Valve according to Claim 1, **characterized in that** said electronic control circuit (30) is arranged in series with the motor (19).

8. Valve according to Claim 1, **characterized in that** said means for defining the time interval for interruption of the power supply of the motor (19) consist of a capacitor (33).

9. Valve according to Claim 8, charcterized in that said capacitor is an electrolytic capacitor.

10. Valve according to Claim 1, **characterized in that** said means supplying the motor (19) with an alternating current less than the nominal current substantially consist of a controlled switch (31) and a drop element (32) arranged in series with the switch.

11. Valve according to Claim 8, **characterized in that** said capacitor (33) is arranged in parallel with said means (31,32) supplying a reduced alternating current.

## Patentansprüche

1. Fluidverteilerventil, umfassend mindestens eine Zuleitung (2) und mindestens zwei Austrittsleitungen (3, 4) für das Fluid, Mittel (5, 6) zum Umleiten des Fluids, die mittels eines mit Wechselstrom gespeisten Motors (19) drehbar sind gegen die Rückstellwirkung von Federn (13, 14), und eine Schaltung (20) zum Steuern des den Motor (19) speisenden Wechselstroms, **dadurch gekennzeichnet, daß** es eine Platte (10) einstückig mit den Umleitmitteln (5, 6) und ausgebildet mit einer Verzahnung (11a), die mit einem entsprechenden, einstückig mit dem Motor (19) ausgebildeten Ritzel (19a) kämmt, aufweist, wobei die Platte einen Gleitschuh (15) aufweist, von dem radial zwei Vorsprünge (16, 17) abstehen, ausgebildet zum Betätigen zweier zugehöriger Schalter (21, 22), die mit der die Motorenergiezufuhr steuernden Schaltung (20) gekoppelt sind, wobei die Schaltung eine Einrichtung (T1, T2) zum Erfassen der Temperatur der Austrittsleitungen (3, 4), eine Zeitgebereinrichtung (33) zum Definieren eines Zeitintervalls, während dessen die Energiezufuhr zu dem Motor (19) unterbrochen ist, und eine Einrichtung (31, 32) zum Speisen des Motors mit einem Wechselstrom, der geringer ist als der Nennstrom, und ausgebildet zum Ausgleichen der Rückstellwirkung der Federn (13, 14) zum Halten der erreichten und von einem (21) der beiden Schalter (21, 22) signalisierten Stellung aufweist.

2. Ventil nach Anspruch 1, **dadurch gekennzeichnet, daß** die Federn (13, 14) Torsionsfedern sind, die mit ihren jeweiligen einander abgewandten Enden an der Platte (10) bzw. an einem feststehenden Basisstück (1c) einstückig mit dem Gehäuse (1b) des Ventils befestigt sind, so daß sie einander gegenüberstehen, jedoch im Verein so wirken, daß sie die Platte (10) in die Ruhestellung zurückstellen.

3. Ventil nach Anspruch 1, **dadurch gekennzeichnet, daß** die Bodenfläche des Gleitschuhs (15) auf einer Blattfeder (18) gleitet, die entsprechend der Ruhestellung des Umleiters (6) gebogen ist, um die Schläge an der Welle des Motors (19), wenn dieser anhält, zu beschränken.

4. Ventil nach Anspruch 1, **dadurch gekennzeichnet, daß** der Motor einstückig mit einem Deckel (1b) des Ventilgehäuses ausgebildet ist.

5. Ventil nach Anspruch 4, **dadurch gekennzeichnet, daß** der Deckel an dem Gehäuse über elastische Schnappeingriffsmittel (1d) angesetzt werden kann, die von Hand betätigt werden.

6. Ventil nach Anspruch 1, **dadurch gekennzeichnet, daß** die Schalter (21, 22) normalerweise geschlossen sind.

7. Ventil nach Anspruch 1, **dadurch gekennzeichnet, daß** die elektronische Steuerschaltung (30) in Reihe zu dem Motor (19) geschaltet ist.

8. Ventil nach Anspruch 1, **dadurch gekennzeichnet, daß** die Einrichtung zum Definieren des Zeitintervalls zum Unterbrechen der Energiezufuhr zu dem Motor (19) aus einem Kondensator (33) besteht.

9. Ventil nach Anspruch 8, **dadurch gekennzeichnet, daß** der Kondensator ein Elektrolytkondensator ist.

10. Ventil nach Anspruch 1, **dadurch gekennzeichnet, daß** die Einrichtung zum Speisen des Motors (19) mit Wechselstrom, der geringer als der Nennstrom ist, im wesentlichen aus einem gesteuerten Schalter (31) und einem in Reihe zu dem Schalter angeordneten Potentialabfallelement (32) besteht.

11. Ventil nach Anspruch 8, **dadurch gekennzeichnet, daß** der Kondensator (33) parallel zu der Einrichtung (31, 32) zum Zuführen eines verringerten Wechselstroms angeordnet ist.

## Revendications

1. Vanne de répartition de fluide comprenant au moins une canalisation d'alimentation (2) et au moins deux canalisations de sortie (3, 4) pour le fluide, des moyens (5, 6) pour dévier le fluide, qui peuvent être entraînés en rotation, au moyen d'un moteur (19) alimenté en courant alternatif, contre l'action de rappel de ressorts (13, 14), et un circuit (20) pour commander ledit courant alternatif alimentant le moteur (19), ***caractérisée en ce qu***'elle comprend une plaque (10) solidaire desdits moyens de déviation (5, 6) et sur laquelle est formée une crémaillère (1 la) configurée pour s'engrener avec un pignon (19a) correspondant solidaire du moteur (19), ladite plaque ayant une pièce coulissante (15) d'où partent radialement deux saillies (16, 17) conçues pour actionner deux interrupteurs correspondants (21, 22) raccordés au circuit (20) commandant l'alimentation électrique du moteur, ledit circuit comprenant des moyens (T1, T2) de détection de la température desdites canalisations de sortie (3, 4), des moyens de minuterie (33) conçus pour définir un intervalle de temps pendant lequel l'alimentation électrique du moteur (19) est interrompue et des moyens (31, 32) d'alimentation du moteur avec un courant alternatif qui est inférieur au courant nominal et conçus pour compenser l'action de rappel desdits ressorts (13, 14) de manière à garder la position atteinte et signalée par l'un (21) des deux interrupteurs (21, 22).

2. Vanne selon la Revendication 1, ***caractérisée en ce que*** lesdits ressorts (13, 14) sont des ressorts de torsion ayant leurs extrémités opposées respectivement fixées à ladite plaque (10) et à une pièce d'embase fixe (1c) solidaire du corps (1b) de la vanne, afin qu'ils soient opposés l'un à l'autre mais agissant de concert pour rappeler la plaque (10) en position de repos.

3. Vanne selon la Revendication 1, ***caractérisée en ce que*** la surface inférieure de ladite pièce coulissante (15) coulisse sur un ressort à lames (18) cintré en correspondance avec la position de repos du moyen de déviation (6) afin de limiter les cognements sur l'arbre du moteur (19) lorsque ce dernier s'arrête.

4. Vanne selon la Revendication 1, ***caractérisée en ce que*** ledit moteur est solidaire d'un cache de protection (1b) du corps de la vanne.

5. Vanne selon la Revendication 4, ***caractérisée en ce que*** ledit cache de protection peut être fixé sur ledit corps par l'intermédiaire de moyens élastiques (1d) d'engagement par encliquetage qui peuvent être mis en oeuvre manuellement.

6. Vanne selon la Revendication 1, ***caractérisée en ce que*** lesdits interrupteurs (21, 22) sont normalement fermés.

7. Vanne selon la Revendication 1, ***caractérisée en ce que*** ledit circuit de commande électronique (30) est monté en série avec le moteur (19).

8. Vanne selon la Revendication 1, ***caractérisée en ce que*** lesdits moyens pour définir l'intervalle de temps pour l'interruption de l'alimentation électrique du moteur (19) sont constitués par un condensateur.

9. Vanne selon la Revendication 8, ***caractérisée en ce que*** ledit condensateur est un condensateur électrolytique.

10. Vanne selon la Revendication 1, ***caractérisée en ce que*** lesdits moyens alimentant le moteur (19) en courant alternatif inférieur au courant nominal sont essentiellement constitués par un interrupteur commandé (31) et par un élément à chute (32) monté en série avec l'interrupteur.

11. Vanne selon la Revendication 8, ***caractérisée en ce que*** ledit condensateur (33) est monté en parallèle avec lesdits moyens (31, 32) fournissant un courant alternatif réduit.
